# EUROPÄISCHE PATENTSCHRIFT

(11) **EP 3 934 942 B1**
(45) Veröffentlichungstag und Bekanntmachung des Hinweises auf die Patenterteilung: **15.01.2025**
(21) Anmeldenummer: 20713175.6
(22) Anmeldetag: 02.03.2020
(51) Int. Cl.: B60R 16/03, B62D 5/04

(54) **KRAFTFAHRZEUGSTEUERGERÄT MIT ZU- UND ABSCHALTFUNKTION FÜR MINDESTENS EINEN VON DEM KRAFTFAHRZEUGSTEUERGERÄT ANZUSTEUERNDEN, ELEKTRISCHEN VERBRAUCHER**
MOTOR VEHICLE CONTROL DEVICE HAVING A SWITCH-ON AND SWITCH-OFF FUNCTION FOR AT LEAST ONE ELECTRICAL CONSUMER THAT IS TO BE CONTROLLED BY THE MOTOR VEHICLE CONTROL DEVICE
APPAREIL DE COMMANDE DE VÉHICULE AUTOMOBILE, COMPORTANT UNE FONCTION DE MISE EN CIRCUIT ET D'ARRÊT POUR AU MOINS UN CONSOMMATEUR ÉLECTRIQUE DEVANT ÊTRE COMMANDÉ PAR L'APPAREIL DE COMMANDE DE VÉHICULE AUTOMOBILE

(30) Priorität: 07.03.2019 DE 102019203111
(43) Veröffentlichungstag der Anmeldung: 12.01.2022
(73) Patentinhaber: thyssenkrupp AG, 45143 Essen (DE); thyssenkrupp Presta AG, 9492 Eschen (LI)
(72) Erfinder: NEVERI, Adam, 8448 Ajka (HU)
(74) Vertreter: thyssenkrupp Intellectual Property GmbH
(86) Internationale Anmeldenummer: PCT/EP2020/055454
(87) Internationale Veröffentlichungsnummer: WO 2020/178245

(56) Entgegenhaltungen:
- DE-A1- 102008 043 835
- DE-U1- 202010 008 060
- US-A1- 2003 098 211
- US-A1- 2015 069 829
- US-A1- 2017 197 566

## Beschreibung

Die Erfindung betrifft ein Kraftfahrzeugsteuergerät mit Zu- und Abschaltfunktion für mindestens einen von dem Kraftfahrzeugsteuergerät anzusteuernden, elektrischen Verbraucher nach dem Oberbegriff des Anspruchs 1.

Durch die zunehmende Anzahl von elektrischen Verbrauchern in Kraftfahrzeugbordnetzen ist es wünschenswert die Stromaufnahme von zeitweise nicht benötigten Verbrauchern zu begrenzen, damit der Ladezustand der Fahrzeugbatterie auch nach längeren Standzeiten ausreicht, um das Kraftfahrzeug zu betreiben. Eine Möglichkeit, um den Ruhestrombedarf von Steuergeräten im Bordnetz zu begrenzen ist es, einen Stand-By- oder Sleep-Modus vorzusehen. Dies ist insbesondere für solche Steuergeräte vorteilhaft, die Funktionen des Kraftfahrzeugs bereitstellen, die auch bei ausgeschalteter Zündung zeitweise benötigt werden, und daher dauerhaft mit der Fahrzeugbatterie verbunden bleiben müssen.

Zur Reduzierung des Ruhestrombedarfs ist ferner aus DE 100 08 266 A1 bekannt, einzelne Steuergeräte mittels einer Vorrichtung ein- und auszuschalten. Die Vorrichtung ermöglicht es im ausgeschalteten Zustand, die komplette Spannungsversorgung für das Steuergerät abzuschalten und es so vom Bordnetz zu trennen. Eine Spannungsdetektierung sorgt bei einem Ausfall und bei Unterspannung in einem Versorgungsspannungspfad für die Zuschaltung eines zweiten Versorgungsspannungspfades, um den Energiebedarf des Verbrauchers zu decken.

DE 10 2011 122 042 A1 beschreibt eine weitere Schaltungsanordnung für ein elektrisches Bordnetz eines Fahrzeugs, bei der ein erstes Steuergerät mittels eines Trennschalters von der Fahrzeugbatterie elektrisch entkoppelbar ist und der Trennschalter mittels eines zweiten Steuergeräts ansteuerbar ist, um den zumindest einen elektrischen Verbraucher und das erste Steuergerät wieder mit der Fahrzeugbatterie elektrisch zu koppeln.

Aus dem Kraftfahrzeugbereich sind zudem Schaltvorrichtungen zu anderen Zwecken als der Reduzierung des Ruhestrombedarfs bekannt. Beispielsweise beschreibt US 2017/0197566 A1 eine Fahrzeugenergieversorgungssteuervorrichtung, welche ein Zuführen und ein Abschalten von elektrischer Energie an/von einem Verbraucher durch Einschalten und Ausschalten einer Halbleiterschaltvorrichtung an einer elektrischen Leitung zum Zuführen der elektrischen Energie an den Verbraucher basierend auf einer Temperatur der elektrischen Leitung ausführt. So können Überströme an vom Benutzer zu wechselnden Bauteilen, wie Abbiegesignallampen oder Scheinwerfern festgestellt und vermieden werden. Ebenso beschreibt DE 10 2008 043 835 A1 ein Schutzschaltglied 14 mit einem Halbleiterschalter, das bei Auftreten eines unerwartet hohen Stromes eine Brückenschaltung zur Versorgung eines in Drehrichtung umkehrbaren Elektromotors, wie er beispielsweise als Zweirichtungspumpe für die Förderung von Scheibenwaschflüssigkeit oder zur Sitzverstellung eingesetzt wird, von der Versorgungsspannung freischaltet.

US 2015/0069829 A1 beschreibt einen in das Batteriemodul integrierten Schaltkreis zum Vorladen eines Gleichstrom-Bus mit einer niedrigeren Spannung bevor die volle Quellenspannung des Batteriemoduls angelegt wird. US 2003/0098211 A1 beschreibt eine Schaltung zur Steuerung einer Kompressorkupplung einer Fahrzeugklimaanlage in Abhängigkeit von einem Fahrsignal.

Einzelne in Kraftfahrzeugen verbaute Steuergeräte enthalten allerdings Steuerelektroniken sowohl für temporär als auch für permanent zur Verfügung zu stellende Funktionen, weshalb diese Steuergeräte nicht vom Bordnetz getrennt werden dürfen, um den Ruhestrombedarf zu reduzieren. Zu solchen Kraftfahrzeugsteuergeräten zählen beispielsweise Steuergeräte für Lenksysteme, welche eine Lenkkraftunterstützung nur während des Betriebs des Kraftfahrzeugs bereitstellen müssen, während Änderungen des Lenkwinkels der gelenkten Räder auch während des Stillstands feststellbar sein müssen. Dies gilt insbesondere für Steer-by-Wire-Lenksysteme.

Nachteilig an den vorbekannten Lösungen ist daher, dass sie nur für solche Steuergeräte einsetzbar sind, die zumindest zeitweise im Zustand ausgeschalteter Zündung vollständig vom Bordnetz getrennt werden dürfen.

Aufgabe der Erfindung ist es daher, ein Kraftfahrzeugsteuergerät anzugeben, das die Ruhestromaufnahme in einem Bordnetz weiter reduziert und zugleich einfach und kostengünstig aufgebaut ist.

Diese Aufgabe wird gelöst durch ein Kraftfahrzeugsteuergerät mit den Merkmalen des Anspruchs 1.

Hierdurch wird ein Kraftfahrzeugsteuergerät geschaffen mit einer Zu- und Abschaltfunktion für mindestens einen von dem Kraftfahrzeugsteuergerät anzusteuernden Verbraucher. Das Kraftfahrzeugsteuergerät umfasst ein elektronisches Schaltelement zur Anordnung in einem Versorgungsspannungspfad des Verbrauchers und eine Steuereinheit zur Ansteuerung des elektronischen Schaltelements. Die Steuereinheit ist dazu ausgebildet, in Abhängigkeit von mindestens einem Eingangssignal ein Steuersignal zum Schalten des elektronischen Schaltelements bereitzustellen. Der schaltbare Verbraucher ist ein Lenkstellantrieb des Kraftfahrzeugs.

Durch das erfindungsgemäße Kraftfahrzeugsteuergerät wird eine Zu- und Abschaltfunktion für einzelne Verbraucher im Bordnetz auf der Ebene der Steuergeräte implementiert. Dadurch kann das Kraftfahrzeugsteuergerät einzelne Verbraucher, die für die Steuerungsaufgabe zeitweise nicht benötigt werden, zeitweilig von der Versorgungsspannung trennen. Dies ist insbesondere von Vorteil für Komponenten und Schaltkreise, die selbst keinen Energiesparmodus aufweisen. Die Erkennung eines jeweils vorliegenden Kraftfahrzeugzustandes erfolgt anhand des mindestens einen Eingangssignals. Auf diese Weise kann die Stromaufnahme des Kraftfahrzeugsteuergeräts insbesondere im Zustand abgeschalteter Zündung minimiert werden.

Vorzugsweise umfasst die Steuereinheit einen an den Versorgungsspannungspfad angeschlossenen Widerstand und eine dazu in Reihe geschaltete Stromregelung zur Erzeugung mindestens einer vorgebbaren Spannungsdifferenz an dem Widerstand als Steuersignal für das elektronische Schaltelement. Durch die Stromregelung kann an dem Widerstand eine Spannungsdifferenz abgegriffen werden, die unabhängig von der schwankenden Bordnetzspannung im Versorgungsspannungspfad ist. Es wird ein konsequentes und kontrolliertes An- und Abschalten des Verbrauchers unabhängig von der Bordnetzspannung erreicht. Indifferente Schaltzustände von elektronischen Schaltelementen, wie sie insbesondere in ungeregelten Schaltkreisen durch Unter- oder Überspannungen entstehen können, werden vermieden. Auch die Notwendigkeit einer Überprüfung des Schaltzustands durch einen zusätzlichen Sensor entfällt.

Die Stromregelung kann beispielsweise einen gegengekoppelten Bipolartransistor umfassen. Der Bipolartransistor bildet in diesem Fall die notwendige negative Rückkopplung des Regelkreises der Stromregelung aus, die einer Änderung des durch den Widerstand fließenden Stroms aufgrund von Spannungsänderungen im Bordnetz entgegenwirkt. In einer besonders einfach aufgebauten Ausführungsform ist die Basis des Bipolartransistors über einen Spannungsteiler an eine geregelte Spannungsquelle angeschlossen ist, die in Abhängigkeit von dem Eingangssignal eine geregelte Ausgangsspannung bereitstellt. Die Basis des Transistors wird somit im Wesentlichen auf einem konstanten Spannungsniveau gehalten, so dass die Schaltung über den gesamten Bereich von zu erwartenden Bordnetzspannungen zuverlässig arbeitet.

Vorzugsweise ist das elektronische Schaltelement ein MOSFET, der über die an dem Widerstand als Gate-Source-Spannung abgreifbare Spannungsdifferenz steuerbar ist. Ein MOSFET ist aufgrund der niedrigen Verluste und seines schnellen Schaltverhaltens als Schaltelement besonders gut geeignet.

Das Eingangssignal kann insbesondere ein Zündungssignal des Kraftfahrzeugs sein. In diesem Fall wird dem Steuergerät über das Eingangssignal unmittelbar der Schaltzustand des Zündschalters und damit ein Indikator für den Kraftfahrzeugzustand mitgeteilt.

Das Kraftfahrzeugsteuergerät kann zusätzlich einen zweiten Versorgungsspannungspfad aufweisen zur ununterbrochenen Stromversorgung von durch das Kraftfahrzeugsteuergerät anzusteuernden direkten Verbrauchern. Durch ein solches Kraftfahrzeugsteuergerät ist es möglich die Steuerelektroniken von zeitweise nicht benötigten Fahrzeugfunktionen vom Bordnetz zu trennen, während andere, von dem gleichen Kraftfahrzeugsteuergerät angesteuerte Verbraucher weiterhin mit Spannung versorgt werden uns sich allenfalls selbst in einen Energiesparmodus versetzen.

Bei dem Kraftfahrzeugsteuergerät kann vorzugsweise zumindest einer der direkten Verbraucher und/oder einer der schaltbaren Verbraucher in das Kraftfahrzeugsteuergerät integriert sein. Insbesondere können die schaltbaren und/oder die direkten Verbraucher Steuerelektroniken für an das Kraftfahrzeugsteuergerät anschließbare oder in dieses integrierte Sensoren und/oder Aktoren sein.

Beispielsweise kann das Kraftfahrzeugsteuergerät das Steuergerät eines Lenksystems sein. Zumindest einer der direkten Verbraucher kann dann ein Lenkwinkelsensor des Lenksystems sein.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch ein Kraftfahrzeug-Lenksystem mit einem Ausführungsbeispiel des erfindungsgemäßen Kraftfahrzeugsteuergeräts,
- Fig. 2: zeigt schematisch den Aufbau eines zweiten Ausführungsbeispiels des erfindungsgemäßen Kraftfahrzeugsteuergeräts,
- Fig. 3: zeigt schematisch einen Schaltplan für ein Kraftfahrzeugsteuergerät gemäß Fig. 1 oder 2.

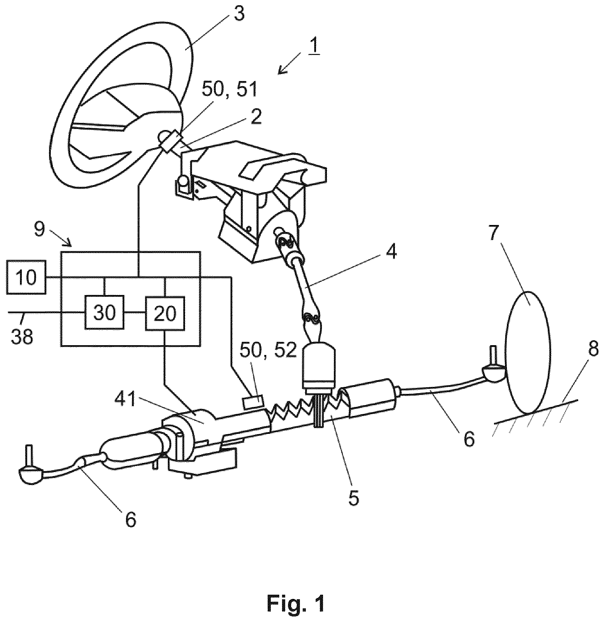

In Fig. 1 ist schematisch ein Kraftfahrzeug-Lenksystem 1 mit einem erfindungsgemäßen Kraftfahrzeugsteuergerät 9 dargestellt, das der Ansteuerung des Lenksystems 1 dient. Das Lenksystem 1 weist ein an einer oberen Lenkwelle 2 befestigtes Lenkrad 3 auf. Der am Lenkrad 3 eingegebene Lenkradwinkel wird über die obere Lenkwelle 2 und die untere Lenkwelle 4 auf ein Lenkgetriebe 5 übertragen, das den Lenkwinkel in eine Translation einer Zahnstange umsetzt. Die Zahnstange ist über Spurstangen 6 mit den gelenkten Rädern 7 verbunden, die in Kontakt mit der Fahrbahn 8 stehen.

Das Lenksystem 1 wird angesteuert durch das Kraftfahrzeugsteuergerät 9. Das Kraftfahrzeugsteuergerät 9 ist an eine Versorgungsspannungsquelle 10 angeschlossen, die die Stromversorgung des Steuergeräts 9 und der daran angeschlossenen Komponenten bereitstellt. Das Kraftfahrzeugsteuergerät 9 enthält ein elektronisches Schaltelement 20 und eine Steuereinheit 30, die das Schaltelement 20 in Abhängigkeit eines Eingangssignals 38 über ein Steuersignal an- und abschalten kann. In dem dargestellten Ausführungsbeispiel ist das Eingangssignal 38 das Zündungssignal des Kraftfahrzeugs.

Das elektronische Schaltelement 20 ist im Spannungsversorgungspfad eines als Lenkstellantrieb 41 ausgebildeten Verbrauchers angeordnet. Durch Schalten des elektronischen Schaltelements 20 kann der Lenkstellantrieb 41 somit von der Versorgungsspannungsquelle 10 getrennt werden. Weiterhin sind an das Kraftfahrzeugsteuergerät Lenkwinkelsensoren 51, 52 als direkte Verbraucher 50 über einen zweiten Spannungsversorgungspfad angeschlossen. Der zweite Spannungsversorgungspfad enthält vorzugsweise kein Schaltelement, so dass eine ununterbrochene Spannungsversorgung der direkten Verbraucher durch die Versorgungsspannungsquelle 10 sichergestellt ist.

Die direkten Verbraucher 50 sind insbesondere für Kraftfahrzeugfunktionen vorgesehen, die jederzeit verfügbar sein müssen. Zur weiteren Verringerung des Ruhestrombedarfs weisen die direkten Verbraucher 50 vorzugsweise einen Stand-By- oder Sleep-Modus auf. Der Stand-By- oder Sleep-Modus hat den Vorteil eines niedrigen Stromverbrauchs bei gleichzeitig schneller Aufweckbarkeit der Verbraucher 50.

Auch wenn sich das gezeigte Ausführungsbeispiel auf eine elektromechanische Kraftfahrzeugservolenkung bezieht, ist das erfindungsgemäße Kraftfahrzeugsteuergerät in gleicher Weise in einem Steer-by-Wire-Lenksystem oder einer elektrohydraulischen Servolenkung einsetzbar.

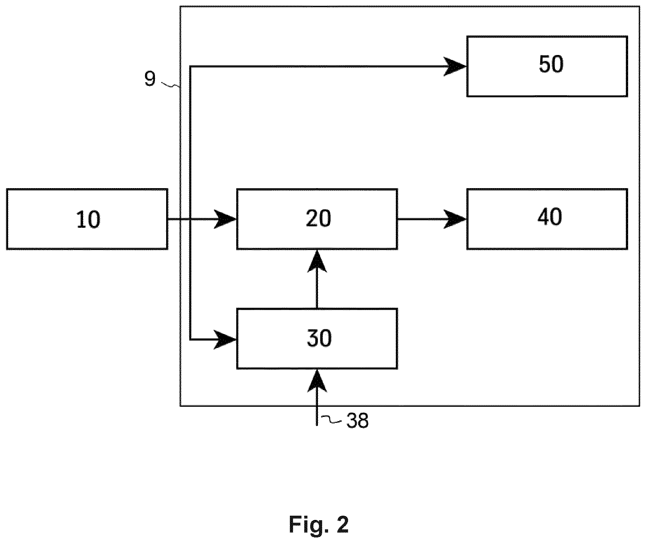

Fig. 2 zeigt schematisch in einem Blockschaltbild den Aufbau eines zweiten Ausführungsbeispiels des erfindungsgemäßen Kraftfahrzeugsteuergeräts. Das Schaltbild zeigt ein Kraftfahrzeugsteuergerät 9, das mit einer Versorgungsspannungsquelle 10, beispielsweise einer Batterie, verbunden ist. Das Kraftfahrzeugsteuergerät 9 enthält integrierte, schaltbare Verbraucher 40 und integrierte direkte Verbraucher 50. Das Kraftfahrzeugsteuergerät 9 enthält ferner ein elektronisches Schaltelement 20, das die Verbraucher 40 von der Stromversorgung 10 trennen oder mit dieser verbinden kann, und eine Steuereinheit 30, die für die Ansteuerung des Schaltelements 20 vorgesehen ist. Sofern es sich bei dem Eingangssignal 38 für die Steuereinheit 30 um ein Zündungssignal 38 des Kraftfahrzeugs handelt, kann die Steuereinheit 30 das Schaltelement 20 beispielsweise im Zustand eingeschalteter Zündung ein schalten, so dass die Verbraucher 40 mit Strom versorgt sind, und bei ausgeschalteter Zündung ausschalten, so dass jeglicher Stromverbrauch durch die Verbraucher 40 unterbunden ist.

Im Unterschied zu dem Ausführungsbeispiel gemäß Fig. 1 sind somit sowohl die schaltbaren Verbraucher 40 als auch die direkten Verbraucher 50 in das Kraftfahrzeugsteuergerät 9 integriert. Die Verbraucher 40 und 50 können beispielsweise Steuerelektroniken für angeschlossene oder integrierte Sensoren und Aktoren sein. In Bezug auf ein Kraftfahrzeug-Lenksystem kann es sich dabei wie im ersten Ausführungsbeispiel um einen Lenkstellantrieb 41 und Lenkwinkelsensoren 51, 52 handeln.

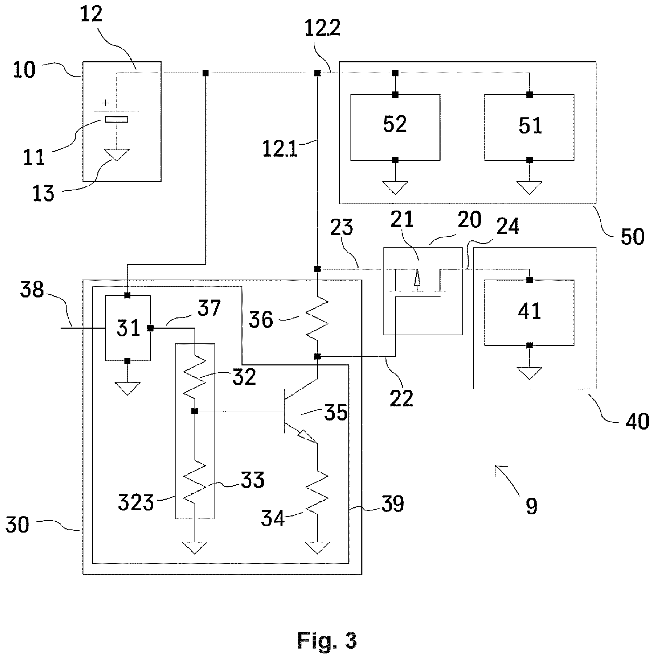

Fig. 3 zeigt beispielhaft einen schematischen Schaltplan für ein Kraftfahrzeugsteuergerät 9 gemäß Fig. 1 und 2. In dem Schaltplan ist die Versorgungsspannungsquelle 10 als eine Batterie 11 ausgebildet, die einerseits mit der Masse 13 des Bordnetzes verbunden ist und an ihrem zweiten Pol eine Versorgungsspannung 12 bereitstellt, an die das Kraftfahrzeugsteuergerät 9 angeschlossen ist. In dem Kraftfahrzeugsteuergerät 9 verzweigt sich die Versorgungsspannung 12 in zwei Versorgungsspannungspfade 12.1 und 12.2. Der erste Versorgungsspannungspfad 12.1 dient der Versorgung eines schaltbaren Verbrauchers 40, beispielsweise einem Lenkstellantrieb 41. Der zweite Versorgungsspannungspfad 12.2 dient der Versorgung von direkten Verbrauchern 50, wie beispielsweise Lenkwinkelsensoren 51, 52.

Zum Zu- und Abschalten des Verbrauchers 40 ist in dem ersten Versorgungsspannungspfad 12.1 ein elektronisches Schaltelement 20 vorgesehen, das in dem gezeigten Ausführungsbeispiel als MOSFET 21 ausgebildet ist. Vorzugsweise wird ein P-Kanal MOSFET verwendet. Der MOSFET 21 ist mit seinem Source-Anschluss 23 mit der Versorgungsspannung 12 und mit seinem Drain-Anschluss 24 mit dem Verbraucher 40 verbunden. Durch Öffnen des MOSFETs 21 kann der Verbraucher 40 somit spannungslos geschaltet werden.

Zum Ansteuern des Schaltelements 20 ist eine Steuereinheit 30 vorgesehen. Die Steuereinheit 30 enthält einen Widerstand 36, der zwischen dem Source-Anschluss 23 und dem Gate-Anschluss 22 des MOSFETs 21 angeschlossen ist. Ein den Widerstand 36 durchfließender Strom erzeugt somit eine Spannungsdifferenz am Widerstand 36, die als Steuersignal für das elektronische Schaltelement 20 dient.

Die Steuereinheit 30 enthält ferner eine an den Widerstand 36 angeschlossene Stromregelung 39, durch die der den Widerstand 36 durchfließende Strom vorgebbar ist. Die Stromregelung 39 umfasst eine geregelte Spannungsquelle 31, die beispielsweise an die Versorgungsspannung 12 angeschlossen ist und zusätzlich einen Eingangsanschluss für ein Eingangssignal 38 aufweist. Die geregelte Spannungsquelle 31 erzeugt eine niedrigere geregelte Ausgangsspannung 37 ausgehend von einer höheren Bordnetzspannung. Die höhere Bordnetzspannung kann durch die Batterie 11 oder eine beliebige andere Spannungsquelle bereitgestellt werden.

Die Ausgangsspannung 37 der geregelten Spannungsquelle 31 wird durch das Eingangssignal 38, beispielsweise ein Zündungssignal des Kraftfahrzeugs, gesteuert. Im einfachsten Fall gibt die Spannungsquelle 31 nur dann einer Ausgangsspannung 37 aus, wenn das Eingangssignal 38 eingeschaltet ist. Ist das Eingangssignal 38 ausgeschaltet, schaltet sich auch die Spannungsquelle 31 ab, sodass keine Ausgangsspannung 37 ausgegeben wird. In diesem Stand-By- oder Sleep-Modus ist daher die Ruhestromaufnahme der Spannungsregelung 39 reduziert. Denkbar ist jedoch auch, dass die geregelte Spannungsquelle 31 abhängig vom Pegel des Eingangssignals 38 unterschiedliche Ausgangsspannungen 37 bereitstellt.

Die Stromregelung 39 umfasst ferner einen gegengekoppelten Bipolartransistor 35. Der Bipolartransistor 35 kann insbesondere ein npn-Transistor sein. Der Kollektor des Bipolartransistors 35 ist an den Widerstand 36 und der Emitter an einen Shunt-Widerstand 34 angeschlossen. Die Basis des Bipolartransistors 35 ist über einen Spannungsteiler 323 mit der Ausgangsspannung 37 der geregelten Spannungsquelle 31 verbunden. In dem dargestellten Ausführungsbeispiel ist der Spannungsteiler 323 durch die beiden Widerstände 32 und 33 gebildet. In einer alternativen Ausführungsform an beispielsweise der Widerstand 33 durch eine Diode, beispielsweise eine Leuchtdiode, ersetzt sein. Hierdurch kann ein Temperaturdrift des Bipolartransistors 35 zumindest teilweise ausgeglichen werden.

Durch die Wahl der Ausgangsspannung 37 und der Widerstände 32 bis 36 kann die an dem Widerstand 36 anfallende Spannungsdifferenz bei eingeschaltetem Eingangssignal 38 auf einen Wert vorgegeben werden, der als Steuersignal ausreicht, um das Schaltelement 20 leitend zu schalten. Bei ausgeschaltetem Eingangssignal 38 ist die Ausgangsspannung 37 vorzugsweise gleich null, sodass dann am Widerstand 36 keine Spannungsdifferenz anfällt und das Schaltelement 20 den Verbraucher 40 von der Versorgungsspannung 12 trennt.

Der in Fig. 3 dargestellte Schaltplan der Steuereinheit 30 zeichnet sich durch einen besonders einfachen Aufbau aus. Es handelt sich bei der Steuereinheit 30 um eine rein passive, analoge Schaltung, die keine eigene Spannungsversorgung für logische Elemente, Mikrocontroller etc. benötigt, und zugleich ein konsequentes und kontrolliertes Abschalten des Verbrauchers 40 unabhängig von der Höhe der Versorgungsspannung 12 ermöglicht.

Im Folgenden wird der Betrieb der Steuereinheit 30 beispielhaft für den Fall beschrieben, dass das Eingangssignal 38 Zündungssignal des Kraftfahrzeugs ist.

Bei eingeschalteter Zündung verhält sich die Steuereinheit 30 als eine Stromsenke, die den Strom von der Versorgungsspannungsquelle 10 durch den Widerstand 36 über den Kollektor des Bipolartransistors 35 aufnimmt. Aufgrund der Stromregelung 39 ist dieser Strom ein im Wesentlichen konstanter, geregelter Strom, sodass die an dem Widerstand 36 anfallende Spannungsdifferenz ebenfalls konstant ist. Dadurch wird weitgehend unabhängig von der Versorgungsspannung 12 ein definiertes Steuersignal für das Schaltelement 20 als Gate-Source Spannung des MOSFETs 21 bereitgestellt.

Bei einer normalen oder erhöhten Versorgungsspannung 12 der Versorgungsspannungsquelle 10 ändert sich der durch den Widerstand 36 fließende Kollektorstrom innerhalb des erwartbaren Spannungsbereichs der Versorgungsspannungsquelle 10 praktisch nicht, sodass die Gate-Source-Spannung des MOSFETs 21 konstant ist. Bei einem Spannungsabfall der Versorgungsspannungsquelle 10 kann der Kollektorstrom und damit die an dem Widerstand 36 anfallende Spannungsdifferenz ebenfalls abfallen. Durch die Dimensionierung der Widerstände 32 bis 36 und die Wahl des Ausgangsspannung 37 kann jedoch sichergestellt werden, dass die die Spannungsdifferenz hoch genug bleibt, um den MOSFET 21 eingeschaltet zu lassen, solange die Versorgungsspannung 12 nicht unterhalb eine definierte Mindestbetriebsspannung fällt. Durch den niedrigen Einschaltwiderstand von MOSFETs ist die Spannungsdifferenz zwischen der Versorgungsspannung 12 und der an dem Drain-Anschluss des MOSFETs anliegenden Spannung vernachlässigbar. Die dargestellte Schaltung hat daher keinen negativen Effekt auf den Betrieb der Verbraucher 40 während des Zustands eingeschalteter Zündung.

Bei ausgeschalteter Zündung wird die geregelte Spannungsquelle 31 vorzugsweise abgeschaltet, wodurch das Kraftfahrzeugsteuergerät 9 in einen Stand-By- oder Sleep-Modus versetzt wird. An der Basis des Bipolartransistors 35 liegt dann keine Spannung mehr an, so dass auch kein Kollektorstrom in den Transistor 35 fließt und die Spannungsdifferenz am Widerstand 36 vernachlässigbar ist. In der Folge öffnet MOSFET 21, so dass der Verbraucher 40 von der Versorgungsspannungsquelle 10 getrennt wird.

Durch die erfindungsgemäße Lösung wird der Betrieb des Verbrauchers 40 bei eingeschaltetem Zündungssignal nicht beeinträchtigt und entspricht einer direkten Verbindung zwischen Verbraucher 40 und Versorgungsspannungsquelle 10, unabhängig von dem Spannungsniveau der Versorgungsspannungsquelle 10. Bei ausgeschaltetem Zündungssignal wird die Stromaufnahme des Kraftfahrzeugsteuergeräts 9 hingegen wesentlich reduziert durch Abschalten der Verbraucher 40, die bei ausgeschalteter Zündung nicht benötigt werden.

Die vorstehenden Ausführungen gelten für andere den Fahrzeugzustand charakterisierende Eingangssignale 38 entsprechend.

### Bezugszeichenliste

- 1: Kraftfahrzeug-Lenksystem
- 2: obere Lenkwelle
- 3: Lenkrad
- 4: untere Lenkwelle
- 5: Lenkgetriebe
- 6: Spurstangen
- 7: Räder
- 8: Fahrbahn
- 9: Kraftfahrzeugsteuergerät
- 10: Versorgungsspannungsquelle
- 11: Batterie
- 12: Versorgungsspannung
- 12.1, 12.2: Versorgungsspannungspfad
- 13: Masse
- 20: elektronisches Schaltelement
- 21: MOSFET
- 22: Gate-Anschluss
- 23: Source-Anschluss
- 24: Drain-Anschluss
- 30: Steuereinheit
- 31: geregelte Spannungsquelle
- 32 bis 36: Widerstände
- 37: Ausgangsspannung
- 38: Eingangssignal
- 39: Stromregelung
- 323: Spannungsteiler
- 40: Verbraucher
- 41: Lenkstellantrieb
- 50: direkter Verbraucher
- 51, 52: Lenkwinkelsensoren

## Patentansprüche

1. Kraftfahrzeugsteuergerät mit Zu- und Abschaltfunktion für mindestens einen von dem Kraftfahrzeugsteuergerät (9) anzusteuernden, elektrischen Verbraucher (40) umfassend ein elektronisches Schaltelement (20) zur Anordnung in einem Versorgungsspannungspfad (12.1) des Verbrauchers (40) und eine Steuereinheit (30) zur Ansteuerung des elektronischen Schaltelements (20), wobei die Steuereinheit (30) dazu ausgebildet ist, in Abhängigkeit von mindestens einem Eingangssignal (38) ein Steuersignal zum Schalten des elektronischen Schaltelements (20) bereitzustellen, **dadurch gekennzeichnet, dass** der Verbraucher (40) ein Lenkstellantrieb (41) des Kraftfahrzeugs ist.

2. Kraftfahrzeugsteuergerät nach Anspruch 1, **dadurch gekennzeichnet, dass** die Steuereinheit (30) einen an den Versorgungsspannungspfad (12.1) angeschlossenen Widerstand (36) und eine dazu in Reihe geschaltete Stromregelung (39) umfasst zur Erzeugung mindestens einer vorgebbaren Spannungsdifferenz an dem Widerstand (36) als Steuersignal für das elektronische Schaltelement (20).

3. Kraftfahrzeugsteuergerät nach Anspruch 2, **dadurch gekennzeichnet, dass** die Stromregelung (39) einen gegengekoppelten Bipolartransistor (35) umfasst.

4. Kraftfahrzeugsteuergerät nach Anspruch 3, **dadurch gekennzeichnet, dass** die Basis des Bipolartransistors (35) über einen Spannungsteiler (323) an eine geregelte Spannungsquelle (31) angeschlossen ist, die in Abhängigkeit von dem Eingangssignal (38) eine geregelte Ausgangsspannung (37) bereitstellt.

5. Kraftfahrzeugsteuergerät nach einem der Ansprüche 2 bis 4, **dadurch gekennzeichnet, dass** das elektronische Schaltelement (20) ein MOSFET (21) ist, der über die an dem Widerstand (36) als Gate-Source-Spannung abgreifbare Spannungsdifferenz steuerbar ist.

6. Kraftfahrzeugsteuergerät nach einem der Ansprüche 1 bis 5, **dadurch gekennzeichnet, dass** das Eingangssignal (38) ein Zündungssignal des Kraftfahrzeugs ist.

7. Kraftfahrzeugsteuergerät nach einem der Ansprüche 1 bis 6, **dadurch gekennzeichnet, dass** zumindest einer der Verbraucher (40) in das Kraftfahrzeugsteuergerät (9) integriert ist.

8. Kraftfahrzeugsteuergerät nach einem der Ansprüche 1 bis 7, **dadurch gekennzeichnet, dass** das Kraftfahrzeugsteuergerät (9) einen zweiten Versorgungsspannungspfad (12.2) aufweist zur ununterbrochenen Stromversorgung von durch das Kraftfahrzeugsteuergerät (9) anzusteuernden direkten Verbrauchern (50).

9. Kraftfahrzeugsteuergerät nach Anspruch 8, **dadurch gekennzeichnet, dass** zumindest einer der direkten Verbraucher (50) ein Lenkwinkelsensor (51, 52) eines Lenksystems (1) ist.

10. Kraftfahrzeugsteuergerät nach Anspruch 8 oder 9, **dadurch gekennzeichnet, dass** zumindest einer der direkten Verbraucher (50) in das Kraftfahrzeugsteuergerät (9) integriert ist.

## Claims

1. A motor vehicle control device having a switch-on and switch-off function for at least one electrical load (40) to be controlled by the motor vehicle control device (9), comprising an electronic switching element (20) for arrangement in a supply voltage path (12.1) of the load (40) and a control unit (30) for controlling the electronic switching element (20), wherein the control unit (30) is designed to provide a control signal for switching the electronic switching element (20) on the basis of at least one input signal (38), **characterized in that** the load (40) is a steering actuating drive (41) of the motor vehicle.

2. The motor vehicle control device as claimed in claim 1, **characterized in that** the control unit (30) comprises a resistor (36) connected to the supply voltage path (12.1) and a current control means (39) connected in series therewith for generating at least one predefinable voltage difference at the resistor (36) as the control signal for the electronic switching element (20).

3. The motor vehicle control device as claimed in claim 2, **characterized in that** the current control means (39) comprises a bipolar transistor (35) having negative feedback.

4. The motor vehicle control device as claimed in claim 3, **characterized in that** the base of the bipolar transistor (35) is connected, via a voltage divider (323), to a controlled voltage source (31) which provides a controlled output voltage (37) on the basis of the input signal (38).

5. The motor vehicle control device as claimed in one of claims 2 to 4, **characterized in that** the electronic switching element (20) is a MOSFET (21) which can be controlled by way of the voltage difference which can be tapped off at the resistor (36) as a gate-source voltage.

6. The motor vehicle control device as claimed in one of claims 1 to 5, **characterized in that** the input signal (38) is an ignition signal of the motor vehicle.

7. The motor vehicle control device as claimed in one of claims 1 to 6, **characterized in that** at least one of the loads (40) is integrated in the motor vehicle control device (9).

8. The motor vehicle control device as claimed in one of claims 1 to 7, **characterized in that** the motor vehicle control device (9) has a second supply voltage path (12.2) for the uninterrupted power supply of direct loads (50) to be controlled by the motor vehicle control device (9).

9. The motor vehicle control device as claimed in claim 8, **characterized in that** at least one of the direct loads (50) is a steering angle sensor (51, 52) of a steering system (1).

10. The motor vehicle control device as claimed in claim 8 or 9, **characterized in that** at least one of the direct loads (50) is integrated in the motor vehicle control device (9).

## Revendications

1. Dispositif de commande de véhicule à moteur ayant une fonction d'activation et de désactivation pour au moins une charge électrique (40) devant être commandée par le dispositif de commande de véhicule à moteur (9), comprenant un élément de commutation électronique (20) destiné à être placé dans un chemin de tension d'alimentation (12.1) de la charge (40) et une unité de commande (30) pour commander l'élément de commutation électronique (20), l'unité de commande (30) étant conçue pour fournir un signal de commande pour la commutation de l'élément de commutation électronique (20) sur la base d'au moins un signal d'entrée (38), **caractérisé en ce que** la charge (40) est une commande de direction (41) du véhicule à moteur.

2. Le dispositif de commande de véhicule à moteur selon la revendication 1, **caractérisé en ce que** l'unité de commande (30) comprend une résistance (36) connectée au chemin de tension d'alimentation (12.1) et un moyen de contrôle du courant (39) connecté en série avec celui-ci pour générer au moins une différence de tension prédéfinissable au niveau de la résistance (36) comme signal de commande pour l'élément de commutation électronique (20).

3. Le dispositif de commande de véhicule à moteur selon la revendication 2, **caractérisé en ce que** le moyen de contrôle du courant (39) comprend un transistor bipolaire (35) à contre-réaction.

4. Le dispositif de commande de véhicule à moteur selon la revendication 3, **caractérisé en ce que** la base du transistor bipolaire (35) est connectée, via un diviseur de tension (323), à une source de tension commandée (31) qui fournit une tension de sortie commandée (37) sur la base du signal d'entrée (38).

5. Le dispositif de commande de véhicule à moteur selon l'une des revendications 2 à 4, **caractérisé en ce que** l'élément de commutation électronique (20) est un MOSFET (21) qui peut être commandé par la différence de tension qui peut être prélevée au niveau de la résistance (36) en tant que tension grille-source.

6. Le dispositif de commande de véhicule à moteur selon l'une des revendications 1 à 5, **caractérisé en ce que** le signal d'entrée (38) est un signal d'allumage du véhicule à moteur.

7. Le dispositif de commande du véhicule à moteur selon l'une des revendications 1 à 6, **caractérisé en ce qu'**au moins une des charges (40) est intégrée dans le dispositif de commande du véhicule à moteur (9).

8. Le dispositif de commande de véhicule à moteur selon l'une des revendications 1 à 7, **caractérisé en ce que** le dispositif de commande de véhicule à moteur (9) possède un second chemin de tension d'alimentation (12.2) pour l'alimentation électrique ininterrompue des charges directes (50) à commander par le dispositif de commande de véhicule à moteur (9).

9. Le dispositif de commande de véhicule à moteur selon la revendication 8, **caractérisé en ce qu'**au moins une des charges directes (50) est un capteur d'angle de direction (51, 52) d'un système de direction (1).

10. Le dispositif de commande du véhicule à moteur selon la revendication 8 ou 9, **caractérisé en ce qu'**au moins une des charges directes (50) est intégrée dans le dispositif de commande du véhicule à moteur (9).
